(19) Europäisches Patentamt
European Patent Office
Office européen des brevets

(11) **EP 4 653 309 A1**

(12) **EUROPEAN PATENT APPLICATION**
published in accordance with Art. 153(4) EPC

(43) Date of publication:
**26.11.2025 Bulletin 2025/48**

(21) Application number: **23917531.8**

(22) Date of filing: **20.01.2023**

(51) International Patent Classification (IPC):
**B63B 79/00** (2020.01)

(52) Cooperative Patent Classification (CPC):
**B63B 79/00**

(86) International application number:
**PCT/JP2023/001628**

(87) International publication number:
**WO 2024/154318 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nippon Yusen Kabushiki Kaisha
Tokyo 100-0005 (JP)**

(72) Inventors:
• **MAEDA, Yoshihiko
Tokyo 100-0005 (JP)**
• **HORIKIRI, Rokuro
Tokyo 100-0005 (JP)**
• **KOBAYASHI, Yoshihiro
Tokyo 100-0005 (JP)**

(74) Representative: **Bandpay & Greuter
11, rue Christophe Colomb
75008 Paris (FR)**

(54) **DATA PROCESSING SYSTEM AND PROGRAM FOR IMPROVING PERFORMANCE OF VESSEL**

(57) In the exemplary embodiment, terminal system 12 includes an acquisition unit 1213 configured to obtain, for each of a plurality of vessels, sample data indicating values of various parameters that affect vessel performance during contemporaneous periods of actual voyages, together with extraction condition data specifying extraction conditions for those parameters. An extraction unit 1212 extracts, from the obtained sample data, those entries that satisfy the indicated extraction conditions as a population. A generation unit 1215 generates statistical value data representing a statistical value of a selected parameter based on the sample data within the population. A display instruction unit 1217 causes display device 122 to present the statistical values indicated by the statistical value data. From the statistical values displayed, a user can discern how vessel performance changes in response to differences in the values of the selected parameter.

[FIG. 2]

EP 4 653 309 A1

**Description**

TECHNICAL FIELD

The present invention relates to technology for improving a performance of a vessel.

BACKGROUND ART

Vessel performance varies based on values of multiple parameters, including parameters related to the vessel's surrounding environment during navigation, such as wind speed and wind direction, and parameters related to vessel attributes, such as vessel type, type of antifouling coating (in the industry, commonly known as "hull paint") applied to the vessel, and a type of fuel used.

In this specification, "performance" refers to a vessel's capability determined by a combination of factors such as vessel speed, fuel consumption, loading capacity, amount of carbon dioxide emissions, and amount of sulfur oxide emissions. For example, focusing on vessel speed, fuel consumption, and loading capacity, for two vessels with the same loading capacity and navigating at the same speed, the vessel with lower fuel consumption is considered to have a higher performance. Likewise, for two vessels with the same loading capacity and navigating with the same fuel consumption, the vessel with higher vessel speed is considered to have higher performance. Further, for two vessels navigating at the same vessel speed and with the same fuel consumption, the vessel with greater loading capacity is considered to have higher performance.

To improve vessel performance, it is known to collect a large volume of sample data indicating combinations of values of various parameters during actual voyages of vessels, and to estimate, using statistical methods such as multivariate analysis, a degree to which each parameter value influences vessel performance.

For example, Patent Document 1 proposes a vessel management device that, from a large set of data indicating combinations of trim, vessel speed, draft, and fuel consumption during navigation, calculates a fuel consumption variation rate resulting from trim changes, thereby reducing fuel consumption without changing a vessel speed or loading capacity, and improving vessel performance.

PRIOR ART DOCUMENT

PATENT DOCUMENT

Patent Document 1: JP2015-83468A

SUMMARY OF THE INVENTION

PROBLEM TO BE SOLVED BY THE INVENTION

In the conventional technology exemplified by the vessel management device described in Patent Document 1, proposals are made for parameter changes to improve performance based on values of various parameters during actual voyages of an individual vessel.

In such a performance improvement method, a target individual vessel must actually navigate with different values of the same parameter. However, among the parameters affecting vessel performance, there are parameters whose values cannot be easily changed.

For example, a vessel type, a country of build, and a shipyard for an individual vessel cannot be changed. Although a presence or absence of fuel-saving devices or scrubbers installed on an individual vessel can be changed, such changes incur substantial costs and cannot be easily implemented. Furthermore, although a type of antifouling coating applied to an individual vessel can be changed, reapplication of an antifouling coating is typically performed at multi-year intervals, so acquiring values of various parameters during actual voyages of the same individual vessel coated with different types of antifouling coating takes several years.

Consequently, using conventional technology, it is difficult to readily determine a degree of influence on vessel performance of parameters that are difficult to change.

In view of the above background, the present invention provides a means that enables determination of a degree of influence on vessel performance even for parameters that are difficult to change for an individual vessel.

MEANS FOR SOLVING THE PROBLEM

To solve the above problems, the present invention provides a data processing system comprising: an acquisition unit configured to acquire, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters; an extraction unit configured to extract, as a population, one or more sample data sets that satisfy the one or more extraction conditions indicated by the extraction condition data set from among the plurality of sample data sets for each of the plurality of vessels; and a generation unit configured to generate, for each of the one or more parameters selected from among the plurality of parameters and parameters determined based on one or more of the plurality of parameters, a statistical value data set representing a statistical value of values indicated by the sample data sets in the population.

In another aspect, the present invention provides A data processing system comprising: an acquisition unit configured to acquire, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters; an extraction unit configured to extract, as a population, one or more sample data sets that satisfy the one or more extraction conditions indicated by the extraction condition data set from among the plurality of sample data sets for each of the plurality of vessels; and a generation unit configured to generate, for each of the one or more parameters selected from among the plurality of parameters and parameters determined based on one or more of the plurality of parameters, a distribution data set representing a distribution of values indicated by the sample data sets in the population.

Further, the present invention provides a program for causing a computer to execute processes comprising: acquiring, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters; extracting, as a population, one or more sample data sets that satisfy the one or more extraction conditions indicated by the extraction condition data set from among the plurality of sample data sets for each of the plurality of vessels; and generating, for each of the one or more parameters selected from among the plurality of parameters and parameters determined based on one or more of the plurality of parameters, a statistical value data set representing a statistical value of values indicated by the sample data sets in the population.

Further, the present invention provides a program for causing a computer to execute processes comprising: acquiring, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters; extracting, as a population, one or more sample data sets that satisfy the one or more extraction conditions indicated by the extraction condition data set from among the plurality of sample data sets for each of the plurality of vessels; and generating, for each of the one or more parameters selected from among the plurality of parameters and parameters determined based on one or more of the plurality of parameters, a distribution data set representing a distribution of values indicated by the sample data sets in the population

ADVANTAGES OF THE INVENTION

According to the present invention, by using data from multiple vessels rather than an individual vessel, information indicating a relationship between each parameter value and vessel performance can be generated for any parameter. As a result, even for parameters affecting vessel performance that are difficult to change for an individual vessel, a degree of influence of those parameter values on vessel performance can be determined.

BRIEF EXPLANATION OF THE DRAWINGS

[FIG. 1] Figure 1 is a diagram illustrating the overall configuration of the data processing system according to an exemplary embodiment of the present invention.
[FIG. 2] Figure 2 is a diagram illustrating the functional configuration of the terminal system according to an exemplary embodiment of the present invention.
[FIG. 3] Figure 3 is a schematic diagram illustrating a parameter definition screen displayed on a display device in the exemplary embodiment of the present invention.

[FIG. 4] Figure 4 is a schematic diagram illustrating an extraction condition input screen displayed on a display device in the exemplary embodiment of the present invention.

[FIG. 5] Figure 5 is a schematic diagram illustrating an output template setting screen displayed on a display device in the exemplary embodiment of the present invention.

[FIG. 6] Figure 6 is an example of a bar graph displayed on the display device in the exemplary embodiment of the present invention.

[FIG. 7] Figure 7 is an example of a scatter plot displayed on the display device in the exemplary embodiment of the present invention.

[FIG. 8] Figure 8 is another example of a scatter plot displayed on the display device in the exemplary embodiment of the present invention.

[FIG. 9A] Figure 9A is yet another example of a scatter plot displayed on the display device in the exemplary embodiment of the present invention.

[FIG. 9B] Figure 9B is yet another example of a scatter plot displayed on the display device in the exemplary embodiment of the present invention.

[FIG. 9C] Figure 9C is yet another example of a scatter plot displayed on the display device in the exemplary embodiment of the present invention.

[FIG. 9D] Figure 9D is yet another example of a scatter plot displayed on the display device in the exemplary embodiment of the present invention.

[FIG. 10] Figure 10 is an example of a table displayed on the display device in the exemplary embodiment of the present invention.

[FIG. 11] Figure 11 is an illustration of an estimated performance display screen displayed on the display device in a modification of the present invention.

[FIG. 12] Figure 12 is an example of a scatter plot and approximation curve displayed on the display device in a modification of the present invention.

[FIG. 13] Figure 13 is another example of a scatter plot and approximation curve displayed on the display device in a modification of the present invention.

MODES FOR CARRYING OUT THE INVENTION

[Exemplary Embodiment]

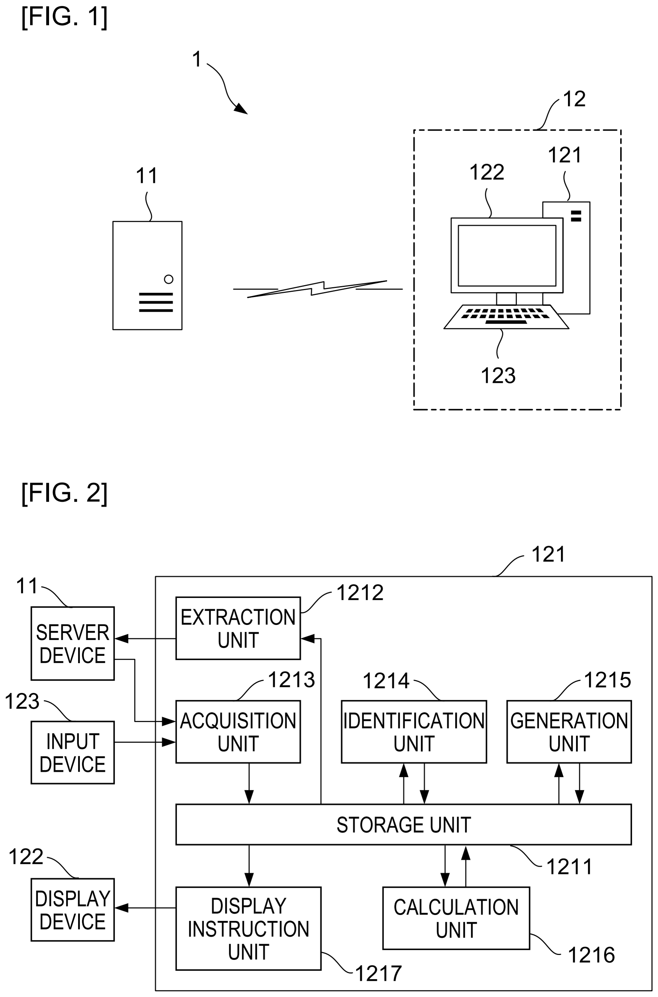

Figure 1 is a diagram illustrating the overall configuration of data processing system 1 according to an exemplary embodiment of the present invention. Data processing system 1 is a system that provides users with information for improving vessel performance.

Data processing system 1 comprises server device 11 and terminal system 12. Server device 11 and terminal system 12 transmit and receive data with each other via a communication network.

Server device 11 functions as a data center. That is, server device 11 stores various data, transmits data to terminal system 12 in response to requests from terminal system 12, and stores data sent from terminal system 12.

The data stored by server device 11 includes a vessel navigation log table (TB). The vessel navigation log TB is an aggregation of sample data, which are data units for a predetermined time length in actual voyages of various vessels. The sample data included in the vessel navigation log TB include values of parameters indicating vessel performance (such as vessel speed, fuel consumption, loading capacity, etc.) during the same period of an actual voyage of a vessel, values of parameters affecting those performance parameters (such as Beaufort wind force scale, wind direction, type of antifouling coating, etc.), and cost values corresponding to those parameters (for example, the cost of the antifouling coating).

The sample data included in the vessel navigation log TB are composed of data representing parameters or cost values corresponding to the following named items. Note that UWC stands for Underwater Cleaning, which refers to an operation of removing marine growth from a hull underwater.

Vessel Name
Vessel Type
Navigation Date
Loading Capacity
Navigation Distance
Vessel Speed over Ground
Vessel Speed through Water
Fuel Consumption
Fuel Cost

Horsepower
Main Engine RPM (Revolutions Per Minute)
Beaufort Wind Force Scale
Swell
Wind Direction
Last Antifouling Coating Date
Antifouling Coating Name
Total Navigation Distance (after Last Antifouling Coating Date)
Antifouling Coating Cost
Number of UWC Operations (after Last Antifouling Coating Date)
Last UWC Date
Total Navigation Distance (after Last UWC Date)
UWC Cost

Hereinafter, the parameters (including cost values) included in the sample data of the vessel navigation log TB are referred to as "original parameters," and are distinguished from parameters defined by the user, which are referred to as "user-defined parameters."

A frequency at which values for the various parameters indicated by the sample data are acquired differs depending on the parameter. For example, some parameters may be acquired every minute, others every hour, and others once per day. A timing at which parameter values are acquired also differs for each parameter. In the present exemplary embodiment, values of the various parameters indicated by the sample data are consolidated as daily values. That is, for parameters with multiple values acquired in a single day, sample data represent a statistical value (for example, an average value after removing outliers) of those multiple values. For parameters with one value acquired over multiple days, sample data represent the value on the target day determined by interpolating multiple values obtained over a long period (for example, several days to several tens of days) using known interpolation methods (such as linear interpolation or spline interpolation).

In the present exemplary embodiment, the vessel navigation log TB is assumed to be constituted of a single table; however, the vessel navigation log TB may be configured as a database including multiple normalized tables. Furthermore, the data items included in the vessel navigation log TB described above are stated by way of example. For instance, the vessel navigation log TB may include data items that are different from those described above, such as a country of build of the vessel, shipyard, fuel type, fuel additive name, type of fuel-saving device installed, presence or absence of a scrubber, and the like.

In the present exemplary embodiment, the server device 11 shown in Figure 1 is configured as a single apparatus; however, the server device 11 may be configured as a system comprising multiple apparatuses that operate in conjunction with each another. Nevertheless, in the following description, server device 11 is assumed to be constituted of a single apparatus.

The hardware of server device 11 is, for example, a general-purpose computer for use as a server device. The computer adopted as the hardware of server device 11 is equipped with a memory that stores various data, a processor that performs various data processing in accordance with programs stored in the memory, and a communication interface for performing data communication with external devices (for example, terminal system 12).

The hardware of terminal system 12 is a general-purpose terminal system, for example, including a computer 121 for a terminal apparatus, a display device 122 connected to computer 121, and an input device 123 (for example, a keyboard, a mouse, etc.).

In the present exemplary embodiment, although computer 121, display device 122, and input device 123 of terminal system 12 shown in Figure 1 are separate, two or more of the same may be configured to be integral. For example, when the hardware of terminal system 12 is a notebook PC or tablet PC, the computer 121, display device 122, and input device 123 are configured as a single apparatus.

Computer 121, similarly to server device 11, is equipped with a memory that stores various data, a processor that performs data processing in accordance with programs stored in the memory, and a communication interface for performing data communication with external devices (for example, server device 11).

Figure 2 is a diagram illustrating the functional configuration of terminal system 12. That is, computer 121 constituting terminal system 12 functions as a data processing device with the configuration shown in Figure 2 by performing, via its processor, data processing in accordance with the program of the present exemplary embodiment. Hereinafter, the functional configuration of terminal system 12 will be described.

Storage unit 1211 stores various data.

Extraction unit 1212 extracts, as the population, one or more sample data satisfying an extraction condition specified by the user from among the plurality of sample data included in the vessel navigation log TB. In the present exemplary embodiment, extraction unit 1212 performs the population extraction by transmitting extraction condition data to server device 11 and receiving one or more sample data transmitted from server device 11 in response thereto.

The extraction condition data that extraction unit 1212 transmits to server device 11 is data indicating the extraction condition for extracting sample data from the vessel navigation log TB. That is, the extraction condition data indicates one or more parameters selected from the plurality of data items included in the vessel navigation log TB (for example, "Beaufort wind force scale") and the extraction conditions for those parameters (for example, "Beaufort wind force scale is 5 or less").

When server device 11 receives the extraction condition data transmitted from terminal system 12, server device 11 extracts, from vessel navigation log TB, the sample data satisfying the extraction condition indicated by the extraction condition data and transmits the extracted one or more sample data to terminal system 12.

Acquisition unit 1213 acquires various data. The data acquired by acquisition unit 1213 is stored in storage unit 1211.

The data acquired by acquisition unit 1213 includes one or more sample data transmitted from server device 11 in accordance with the extraction condition data transmitted by extraction unit 1212, and extraction condition data generated by input device 123 in accordance with user operations. Extraction unit 1212 transmits to server device 11 the extraction condition data that acquisition unit 1213 has acquired from input device 123 and [is] temporarily stored in storage unit 1211.

Identification unit 1214, for each of one or more sets of sample data acquired by acquisition unit 1213 from server device 11, identifies one or more new parameters (user-defined parameters) in accordance with a predetermined rule (for example, a predetermined calculation formula) based on one or more values of parameters (original parameters) included in the sample data.

For example, a case where identification unit 1214 identifies a user-defined parameter called a fouling coefficient will be described. The fouling coefficient is an index value indicating a degree of effect of an antifouling coating on reducing fuel consumption.

Identification unit 1214 first extracts sample data related to a target vessel (hereinafter referred to as vessel X) from the population. Subsequently, identification unit 1214 identifies, based on the last antifouling coating date and antifouling coating name indicated by the sample data of vessel X, the periods during which vessel X navigated with which antifouling coating applied.

For example, supposing that vessel X was launched on date D0 with antifouling coating A applied at the time of shipbuilding, thereafter began navigating on date D1 with antifouling coating B reapplied, and further began navigating on date D2 with antifouling coating C reapplied, and has continued to the present. In this case, identification unit 1214 identifies the following information:

First period (date DO-date D1): antifouling coating A
Second period (date D1-date D2): antifouling coating B
Third period (date D2-present): antifouling coating C

Next, identification unit 1214, from among the one or more periods thus identified, identifies as a post-coating period TA a predetermined period from the start date for each of the first period and the second period, excluding the third period for which the last day is not determined. The post-coating period TA is a period in which, for example, the end date is a date on which a predetermined number of days have elapsed from the start date. However, the post-coating period TA may be defined as a period in which the end date is the date on which the total navigation distance after the start date reaches a predetermined threshold.

Hereinafter, it is assumed that the post-coating period TA is the period of up to 30 days from the start date. In this case, identification unit 1214 identifies, for the first period, the 30-day period from date D0 as the post-coating period TA, and identifies, for the second period, the 30-day period from date D1 as the post-coating period TA.

Next, identification unit 1214, based on the navigation distance and fuel consumption indicated by the sample data for vessel X, determines for the first period the following:
The unit fuel consumption E1 per unit navigation distance during the post-coating period TA of the first period; the total fuel consumption G1 during the first period; and, the total navigation distance N1 during the first period.

Next, identification unit 1214 calculates the fouling coefficient F1 (%) for the first period using the following equation:

$$F1 = ((G1 - E1 \times N1) / (E1 \times N1)) \times 100$$

Further, identification unit 1214, based on the navigation distance and fuel consumption indicated by the sample data for vessel X, determines for the second period the following:
The unit fuel consumption E2 per unit navigation distance during the post-coating period TA of the second period; the total fuel consumption G2 during the second period; and, the total navigation distance N2 during the second period.

Next, identification unit 1214 calculates the fouling coefficient F2 (%) for the second period using the following equation:

$$F2 = ((G2 - E2 \times N2) / (E2 \times N2)) \times 100$$

Thus, identification unit 1214 specifies, as new parameters (fouling coefficients) for vessel X, the fouling coefficient F1 corresponding to antifouling coating A applied during the first period and the fouling coefficient F2 corresponding to antifouling coating B applied during the second period.

The fouling coefficient determined as described above takes a smaller value the higher the performance of the antifouling coating.

Identification unit 1214, for example, adds data indicating the fouling coefficient F1 for vessel X's first period to each of the sample data entries relating to that first period. Similarly, identification unit 1214 adds data indicating the fouling coefficient F2 for vessel X's second period to each of the sample data entries relating to that second period.

As described above, acquisition unit 1213 acquires sample data for vessel X across multiple distinct periods (each indicating values for the same parameter), and identification unit 1214 specifies the fouling coefficient based on the values of the same parameter (fuel consumption, navigation distance, etc.) indicated by the sample data across the multiple periods.

Acquisition unit 1213 performs the same processing described above for vessel X on each of multiple different vessels such as vessel Y, vessel Z, and so forth. Likewise, identification unit 1214 performs the same processing described above for vessel X on each of the multiple different vessels. As a result, numerous fouling coefficients are specified, including, for example, the fouling coefficient when antifouling coating A is applied to vessel X, the fouling coefficient when antifouling coating A is applied to vessel Y, the fouling coefficient when antifouling coating B is applied to vessel X, the fouling coefficient when antifouling coating B is applied to vessel Y, and so on for various combinations of vessels and antifouling coatings.

The fouling coefficient is one example of a user-defined parameter that identification unit 1214 specifies; any other type of parameter may be specified by identification unit 1214 so long as it is based on one or more parameters indicated by the sample data.

Generation unit 1215 generates statistical value data representing statistical values for one or more selected parameters (original parameters and user-defined parameters) based on the values indicated by the sample data included in the corresponding population. Generation unit 1215 also generates distribution data representing the distribution of values indicated by the sample data for one or more selected parameters (original parameters and user-defined parameters).

Calculation unit 1216 uses the values indicated by the sample data to calculate various index values related to vessel performance, costs, and so on. For example, calculation unit 1216 uses statistical values (e.g., the average fouling coefficient for each antifouling coating name) indicated by the statistical value data generated by generation unit 1215 and cost values indicated by the sample data (e.g., the antifouling coating cost) to calculate, using a predetermined calculation formula, cost values corresponding to each population (e.g., for each antifouling coating name).

Display instruction unit 1217 instructs display device 122 to display various information. The information that display instruction unit 1217 instructs display device 122 to display includes the statistical values indicated by the statistical value data generated by generation unit 1215, the distributions represented by the distribution data generated by generation unit 1215, and the various index values calculated by calculation unit 1216. This concludes the description of the functional configuration of terminal system 12.

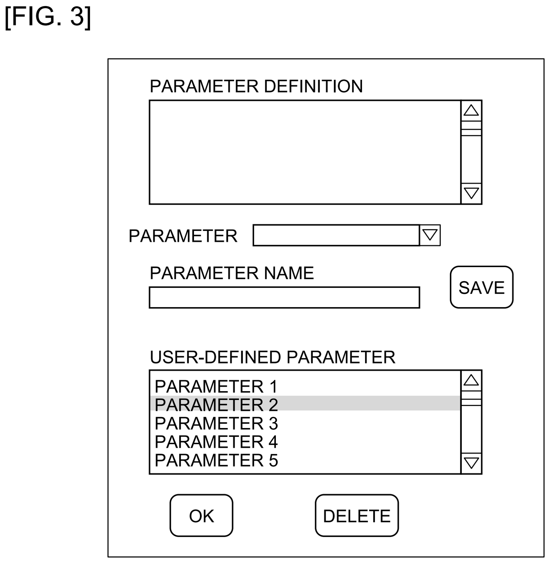

Figure 3 is a schematic diagram illustrating the parameter definition screen displayed by display device 122 in accordance with instructions from display instruction unit 1217. The parameter definition screen is used by the user to define new parameters (user-defined parameters).

On the parameter definition screen, the user enters, into the parameter definition field, conditional expressions, calculation formulas, and the like (hereinafter "parameter definition information") indicating a procedure for specifying a new parameter using existing parameters. The user then enters into the parameter name field a parameter name identifying the parameter specified according to the parameter definition information, and clicks the [Save] button. This operation stores the parameter definition data representing the parameter definition information entered by the user. The corresponding parameter name is displayed in the user-defined parameter list, and the user can select a parameter name from the list and click the [OK] button to load and reuse the stored parameter definition data.

When the user inputs parameter definition information into the parameter definition field, the user can select existing parameters (original parameters and user-defined parameters) from the "parameter" pull-down menu, causing the selected parameter's name to be entered as a variable in the parameter definition field.

A parameter defined by the user on the parameter definition screen is specified by identification unit 1214 using values of parameters (original parameters) included in the sample data extracted from the vessel navigation log TB.

Accordingly, the fouling coefficient described above is one example of a user-defined parameter specified by the user on the parameter definition screen.

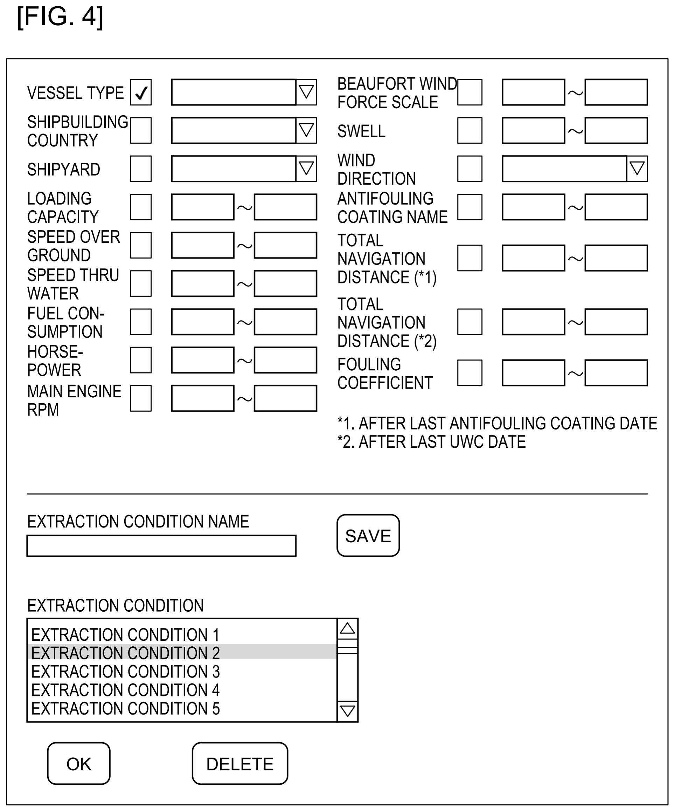

Figure 4 is a schematic diagram of the extraction condition input screen displayed by display device 122 in accordance with instructions from display instruction unit 1217. The extraction condition input screen is used by the user to enter extraction conditions.

On the extraction condition input screen, a checkbox and an input box corresponding to each parameter (original parameters and user-defined parameters) are displayed.

A checkbox is a box that the user checks when including a condition for the corresponding parameter in the extraction conditions.

An input box is composed, for example, of a single input box for entering one or more values for the corresponding parameter, or a pair of two input boxes for entering a range of values for the corresponding parameter (one input box for the lower limit and one input box for the upper limit).

Note that, the input box is of a type appropriate for the type of parameter, and may be a free-form text box for user text entry or a pull-down menu allowing the user to select from multiple provided options.

On the extraction condition input screen, after the user enters the extraction conditions and then inputs a name to identify those conditions, the user clicks the [Save] button (or similar). This operation stores the extraction condition data representing the user-entered extraction conditions. The saved extraction condition names are displayed in the extraction condition list, and the user can select any name from the list and click the [OK] button to load and reuse the stored extraction condition data.

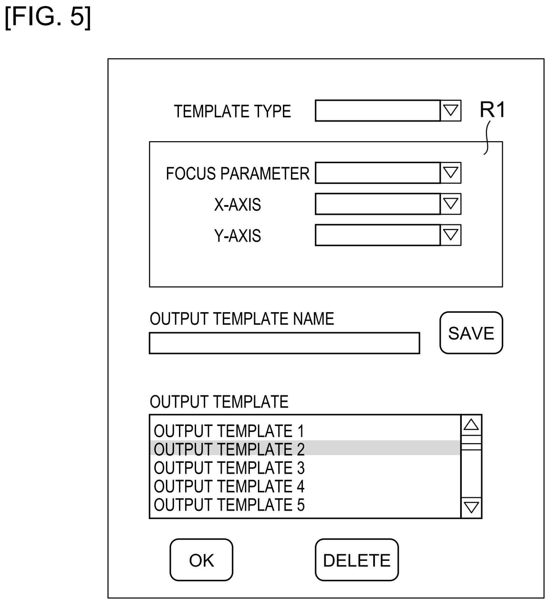

Figure 5 is a schematic diagram of the output template setting screen displayed by display device 122 in accordance with instructions from display instruction unit 1217. The output template setting screen is used by the user to set an output template that defines the format of information (graphs, lists, etc.) to be displayed by display device 122.

On the output template setting screen, the user first selects the type of output template from the "template type" pull-down menu. Depending on the type of template selected, the input boxes and other fields shown in area R1 of the screen change. In Figure 5, as examples, area R1 displays a "focus parameter" pull-down menu, an "X-axis" pull-down menu, and a "Y-axis" pull-down menu.

The "focus parameter" pull-down menu allows the user to specify a focus parameter, which is the parameter used to group the extracted sample data ("parent population") into multiple sub-populations ("child populations"). For example, if "antifouling coating name" is chosen as the focus parameter, the parent population is grouped into child populations, each corresponding to a different antifouling coating name, and a separate graph for each coating name is displayed by display device 122.

The "X-axis" pull-down menu allows the user to specify, for the graph's X-axis, either a parameter value or a statistical value of a parameter. Similarly, the "Y-axis" pull-down menu allows the user to specify, for the graph's Y-axis, either a parameter value or a statistical value of a parameter.

On the output template setting screen's area R1, the user enters the information necessary to define the output template and then inputs a name to identify the template. After clicking the [Save] button (or similar), the output template data representing the user's settings is stored. The saved template names are shown in the "output template" list, and the user can select any template name and click the [OK] button to load and reuse the stored template data.

Display device 122 presents graphs, lists, and other information in accordance with the user-entered data on the extraction condition input screen, parameter definition screen, and output template setting screen. If the user modifies any information on those screens, the displayed graphs and tables are updated to reflect the changes. Examples of graphs displayed by display device 122 are described below.

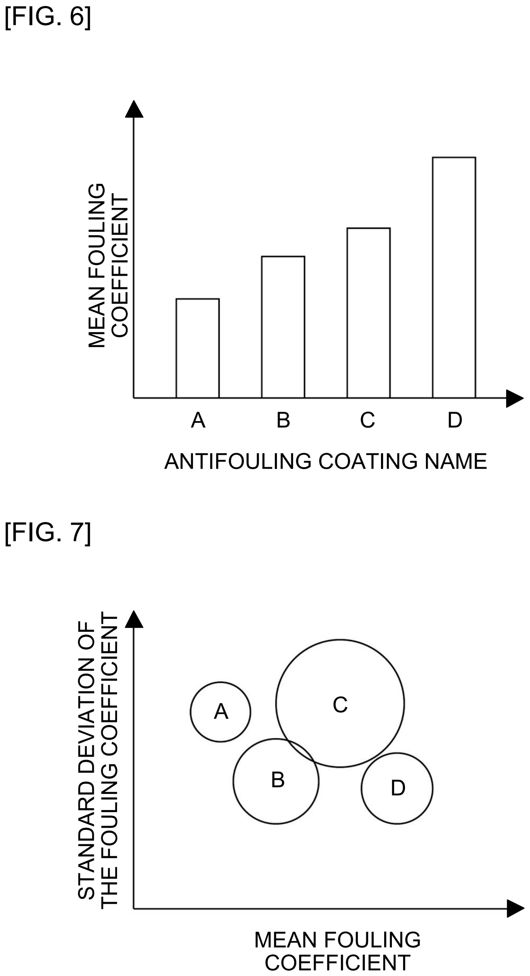

Figure 6 is a bar graph in which the X-axis indicates antifouling coating names and the Y-axis indicates the mean fouling coefficient. In Figure 6, for each of four antifouling coatings A, B, C, and D, the height of the bar shows the mean fouling coefficient across various vessels in a corresponding child population. As noted above, a lower fouling coefficient indicates a higher coating performance. Therefore, from Figure 6, the user can readily determine, for example, that coating A exhibits the highest performance among the four coatings.

It is note that the mean fouling coefficient shown for each antifouling coating in Figure 6 is a statistical value computed across fouling coefficients from multiple different vessels (and may include multiple coefficients from the same vessel). In other words, the statistical values illustrated in Figure 6 pertain to vessel groups comprising multiple vessels, not to individual vessels.

Figure 7 is a scatter graph in which the X-axis indicates the mean fouling coefficient and the Y-axis indicates the standard deviation of the fouling coefficient. The four plotted plots correspond to the four antifouling coatings A, B, C, and D. The size of each plot reflects a number of sample data points in an associated child population. The statistical values (mean and standard deviation) used to generate each plot are calculated from sample data drawn from multiple different vessels (and may include multiple data points from the same vessel). From Figure 7, the user can, for example, easily discern that coating A, compared to coating B, generally offers higher performance but exhibits greater variability.

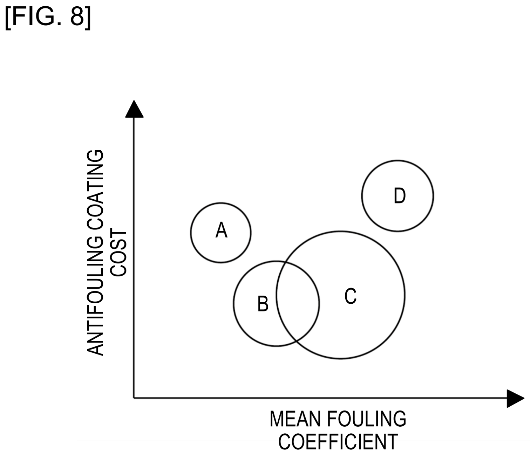

The graph in Figure 8 differs from that in Figure 7 in that the Y-axis represents antifouling coating cost (for example, the antifouling coating price per unit area). For each plot shown in Figure 8, the statistical values plotted (in this case, the mean fouling coefficient and the antifouling coating cost) are computed from sample data drawn from multiple different vessels (and may include multiple data points from the same vessel). From the graph in Figure 8, the user can readily discern, for example, that antifouling coating A delivers high efficacy relative to coating B but at a higher cost.

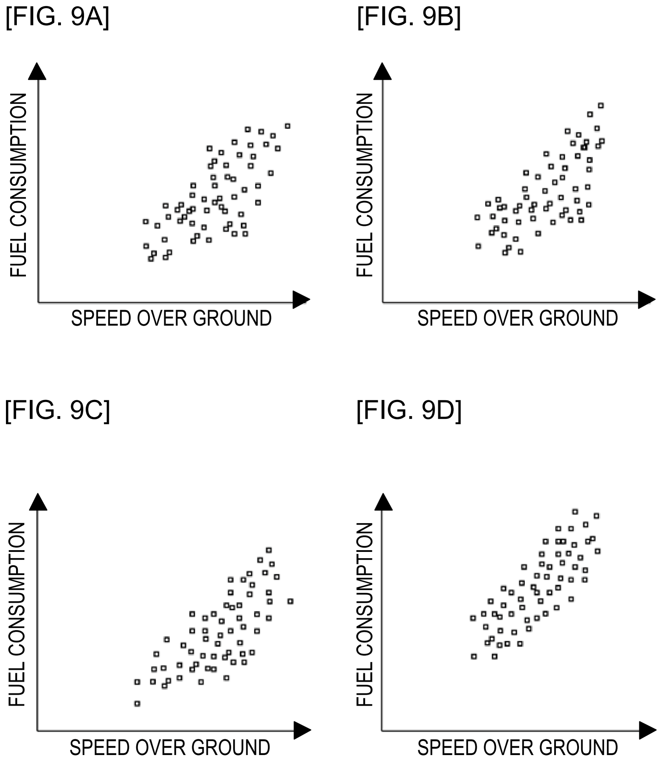

The four graphs shown in Figure 9 are each scatter plots with vessel speed over ground on the X-axis and fuel consumption on the Y-axis. Each point in these scatter plots corresponds to (a) single sample data. Th sample data comprises collections from multiple different vessels (and may include multiple data points from the same vessel). In these graphs, the closer the distribution of points is to the lower-right region, the higher the vessel's navigation performance; conversely, distributions toward the upper-left region indicate lower navigation performance.

Figures 9A and 9B are both scatter plots of sample data from various vessels coated with antifouling coating A. However, Figure 9A shows data from the initial post-coating period of a specified duration (for example, 30 days), whereas Figure 9B shows data from a specified duration (for example, 30 days) after a certain elapsed time since coating (for example, 3 years).

Figures 9C and 9D are both scatter plots of sample data from various vessels coated with antifouling coating B. Figure 9C depicts the initial post-coating period of specified duration, and Figure 9D depicts the specified-duration data after a certain elapsed time post-coating.

The four graphs in Figure 9 show that vessels coated with antifouling coating A exhibit a smaller difference between navigation performance immediately post-coating and performance after the specified elapsed time than vessels coated with coating B. The primary factor driving the difference in navigation performance between these periods is hull fouling caused by attachment of marine organisms. Thus, the smaller the performance difference, the higher the efficacy of the coating. Accordingly, from Figure 9, the user can infer that antifouling coating A outperforms coating B.

Note that whereas the graphs in Figures 6 through 8 display statistical values computed from the values indicated by sample data within a population, the graphs in Figures 9A through 9D represent the distribution of sample data values within a population. In all cases, these graphs pertain not to data of individual vessels but to populations comprising sample data from multiple different vessels.

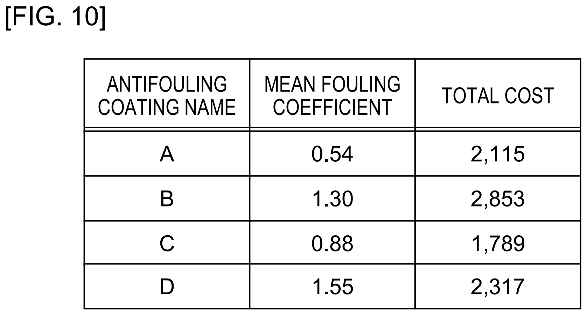

Figure 10 is a table showing, for each of antifouling coatings A through D, the mean fouling coefficient and the total cost (an example cost value per population) calculated using the following formula:

[total cost] = [antifouling coating cost] + [standard daily fuel consumption] $\times$ [standard operating rate] $\times$ [standard period length] $\times$ [standard fuel price] $\times$ [fouling coefficient] + [UWC cost]

The statistical values shown in the table of Figure 10 (in this case, the mean fouling coefficient and the total cost) are computed from sample data drawn from multiple different vessels (and may include multiple data points from the same vessel).

In the above formula, antifouling coating cost and UWC cost are the mean values indicated by the sample data; the fouling coefficient is the mean of values identified from the sample data. The remaining terms are constants, for example:

standard daily fuel consumption: 50 MT/day
standard operating rate: 0.6
standard period length: 2.5 years
standard fuel price: 489 USD

The total cost approximates the increase in biofouling-related costs to the hull, taking into account the expenses of applying the antifouling coating and performing UWC. Therefore, a lower total cost indicates a better cost performance of the antifouling coating.

From the table in Figure 10, the user can determine that if fuel-consumption reduction is a priority, antifouling coating A with the smallest fouling coefficient should be chosen; but if cost performance is a priority, coating C with the lowest total cost should be selected.

This concludes the description of data processing system 1. According to the above-described system, the user can ascertain a degree of influence on vessel performance of parameters that are difficult to change for an individual vessel.

[Modifications]

The above exemplary embodiment may be modified in various ways. Examples of such modifications are described below. Note that the above embodiment and the following modifications may be combined as appropriate.

(1) Calculation unit 1216 of terminal system 12 in data processing system 1 may be configured to use statistical values indicated by statistical value data generated by generation unit 1215 to calculate, for an individual vessel, a performance value that the vessel would achieve if a target parameter were changed.

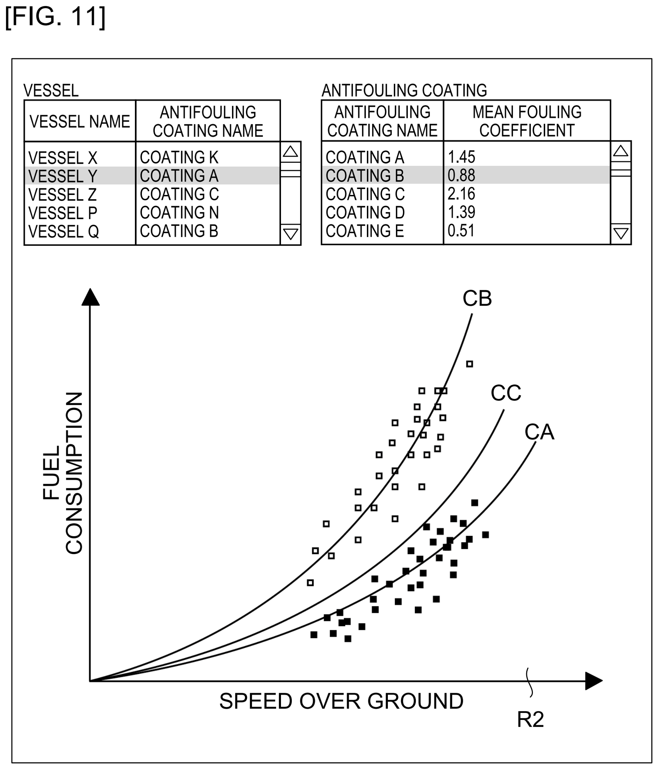

Figure 11 illustrates an example of an estimated performance display screen displayed by display device 122 in the data processing system according to this modification. The estimated performance display screen shows a vessel list, an antifouling coating list, and a coordinate area R2 with vessel speed over ground on the X-axis and fuel consumption on the Y-axis.

The vessel list displays vessel names and, for each vessel name, the antifouling coating name applied to that vessel. The antifouling coating list displays coating names and, for each coating, the mean fouling coefficient corresponding to that coating name.

Supposing that the user wishes to know the performance of vessel Y (an example vessel included in the first population) if coating B were applied instead of coating A.

In this case, the user selects vessel Y from the vessel list and then selects coating B from the antifouling coating list.

In response to the user's operation of selecting vessel Y, extraction unit 1212 of terminal system 12 extracts, from the population that acquisition unit 1213 has already obtained from server device 11, the sample data relating to vessel Y's immediate post-coating period as child population PA. Extraction unit 1212 also extracts, from the same acquired population, the sample data relating to vessel Y's most recent specified period as child population PB.

Next, generation unit 1215 generates a scatter plot SA by plotting each sample data contained in child population PA. Generation unit 1215 likewise generates a scatter plot SB by plotting each sample data contained in child population PB.

Then, calculation unit 1216 computes an approximation curve CA for the plots shown in scatter plot SA and an approximation curve CB for the plots shown in scatter plot SB. Henceforth, let Y(A) denote the fuel consumption on approximation curve CA at a given vessel speed over ground X, and let Y(B) denote the fuel consumption on approximation curve CB at the same vessel speed X.

Subsequently, for various vessel speeds over ground X, calculation unit 1216 calculates fuel consumption Y(C) using the following formula:

$$Y(C) = Y(A) + (Y(B) - Y(A)) \times (F(B) / F(A))$$

where F(A) is the average fouling coefficient for antifouling coating A, and F(B) is the average fouling coefficient for antifouling coating B.

Then, for each vessel speed over ground X, calculation unit 1216 plots the coordinate (X, Y(C)) and computes an approximation curve CC through those points.

Generation unit 1215 generates graph data representing scatter plot SA, scatter plot SB, approximation curve CA, approximation curve CB, and approximation curve CC. Display instruction unit 1217 instructs display device 122 to render the graph corresponding to the generated graph data. As a result, the coordinate area R2 on the estimated performance display screen shows a graph as illustrated in Figure 11.

Approximation curve CC represents the estimated performance that vessel Y would have exhibited during the most recent specified period if antifouling coating B had been applied. From the graph shown in Figure 11, the user can easily determine by how much performance would change if vessel Y were coated with antifouling coating B compared to the currently applied antifouling coating A.

In the above example, the focus parameter is the "antifouling coating name." Furthermore, the average fouling coefficient F(A) for antifouling coating A is the statistical value generated by generation unit 1215 for the population composed of sample data satisfying the extraction condition "antifouling coating name = antifouling coating A" (as indicated by the first extraction condition data). Similarly, the average fouling coefficient F(B) for antifouling coating B is the statistical value generated by generation unit 1215 for the population composed of sample data satisfying the extraction condition "antifouling coating name = antifouling coating B" (as indicated by the second extraction condition data).

(2) In the exemplary embodiment described above, some of the processing performed by terminal system 12 may instead be carried out by server device 11. Moreover, terminal system 12 may store the vessel navigation log TB itself, and data processing system 1 may omit server device 11 altogether.

(3) In the exemplary embodiment described above, the fouling coefficient is treated as a user-defined parameter, but parameters that serve as original parameters and that serve as user-defined parameters may be changed. For example, the fouling coefficient could be stored in vessel navigation log TB in advance as an original parameter.

(4) In the above description of the exemplary embodiment, information presented to the user by data processing system 1 focuses on changes in vessel performance due to differences in antifouling coating. However, the information presented may instead illustrate changes in vessel performance due to differences in parameters other than antifouling coating. For example, data processing system 1 may present information showing how vessel performance varies when shipbuilding country, shipyard, fuel type, fuel additive type, presence or absence of a fuel-saving device, presence or absence of a scrubber, presence or absence of blasting-based surface preparation, and so forth differ.

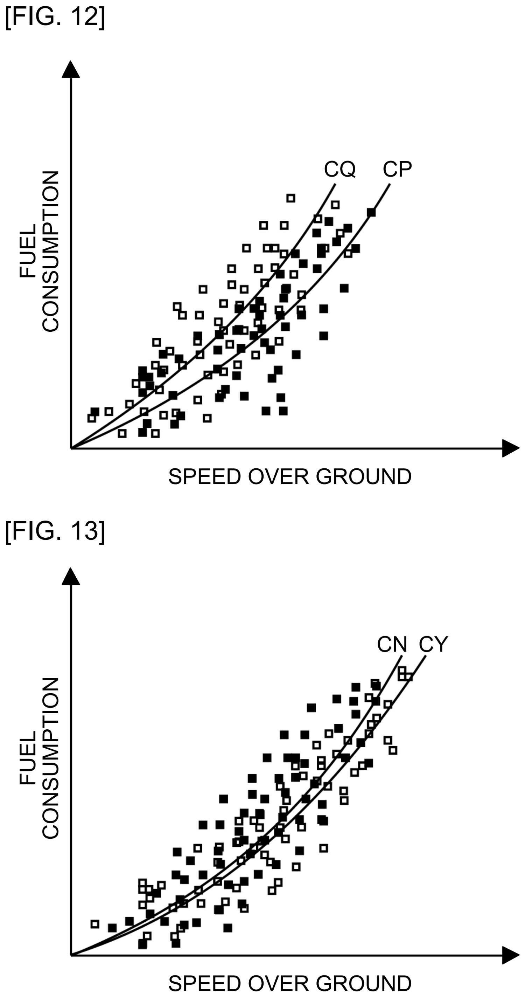

For example, Figure 12 is a diagram illustrating an example graph displayed by data processing system 1 to compare the performance of vessels of a specific vessel type manufactured by shipyard P with those of the same type manufactured by shipyard Q. In Figure 12, the X-axis represents vessel speed over ground and the Y-axis represents fuel consumption.

The black-square plots shown in Figure 12 represent the vessel speed over ground and fuel consumption combinations indicated by sample data from multiple vessels satisfying all of the following conditions:

The manufacturing shipyard is shipyard P.
The vessel type is Capesize dry bulk carrier.
The data are within the three-month period immediately after manufacture.
The Beaufort scale is 3 or less.

The curve CP shown in Figure 12 is the approximation curve through the black-square plots.
The white-square plots shown in Figure 12 represent the vessel speed over ground and fuel consumption combinations indicated by sample data from multiple vessels satisfying all of the following conditions:

The manufacturing shipyard is shipyard Q.
The vessel type is Capesize dry bulk carrier.
The data are within the three-month period immediately after manufacture.
The Beaufort scale is 3 or less.

The curve CQ shown in Figure 12 is the approximation curve through the white-square plots.
In the example of Figure 12, curve CP for vessels built by shipyard P lies lower-right of curve CQ for vessels built by shipyard Q. This indicates that, statistically, vessels built by shipyard P exhibit higher performance than those built by shipyard Q.
For example, Figure 13 is a diagram illustrating an example graph displayed by data processing system 1 to compare performance when blasting-based surface preparation is performed prior to hull coating versus when it is not. In Figure 13, the X-axis represents vessel speed over ground and the Y-axis represents fuel consumption.
The black-square plots shown in Figure 13 depict combinations of vessel speed over ground and fuel consumption indicated by sample data for multiple vessels satisfying all of the following conditions:

Blasting-based surface preparation has been performed.
The vessel type is Capesize dry bulk carrier.
The data fall within the three-month period immediately after coating.
The Beaufort scale is 3 or less.

The curve CY shown in Figure 13 is the approximation curve for the black=square plots.
The white-square plots shown in Figure 13 depict combinations of vessel speed over ground and fuel consumption indicated by sample data for multiple vessels satisfying all of the following conditions:

Blasting-based surface preparation has not been performed.
The vessel type is Capesize dry bulk carrier.
The data fall within the three-month period immediately after coating.
The Beaufort scale is 3 or less.

The curve CN shown in Figure 13 is the approximation curve for the white-square plots.
Since curve CY is located to the lower-right of curve CN, it can be seen that blasting-based surface preparation improves vessel performance; however, the difference is not substantial.
For example, data processing system 1 calculates, based on the distribution of vessel speeds over ground in past navigation for a user-selected vessel (e.g., vessel X) and the reduction in fuel consumption determined from the difference between curves CY and CN, an estimated fuel-cost saving when performing blasting-based surface preparation prior to coating vessel X. The user can compare this estimated fuel-cost saving, computed by data processing system 1, with the costs associated with blasting-based surface preparation (including the preparation itself and opportunity losses) to decide whether to perform blasting-based surface preparation on vessel X.

(5) The present invention can be embodied as a program that causes computer 121 of terminal system 12 constituting data processing system 1 to execute the processing performed by terminal system 12. Such a program may be provided in a non-transitory recorded form on a storage medium readable by a computer, or may be downloaded to the computer via a communication network.

DESCRIPTION OF REFERENCE NUMERALS

1: Data processing system
11: Server device
12: Terminal system
121: Computer
122: Display device
123: Input device
1211: Storage unit
1212: Extraction unit
1213: Acquisition unit
1214: Identification unit
1215: Generation unit
1216: Calculation unit
1217: Display instruction unit

**Claims**

1. A data processing system comprising:

   an acquisition unit configured to acquire, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters;
   an extraction unit configured to extract, as a population, one or more sample data sets that satisfy the one or more extraction conditions indicated by the extraction condition data set from among the plurality of sample data sets for each of the plurality of vessels; and
   a generation unit configured to generate, for each of the one or more parameters selected from among the plurality of parameters and parameters determined based on one or more of the plurality of parameters, a statistical value data set representing a statistical value of values indicated by the sample data sets in the population.

2. The data processing system according to Claim 1, wherein:

   the acquisition unit is configured to acquire a plurality of extraction condition data sets;
   the extraction unit is configured to extract, for each of the plurality of extraction condition data sets, one or more sample data sets that satisfy one or more extraction conditions indicated by the extraction condition data set, as a population;
   the generation unit is configured to generate, for each of a plurality of populations extracted by the extraction unit, a statistical value data set representing a statistical value of values indicated by the sample data sets in the population, and
   the data processing system further comprises a display instruction unit configured to instruct a display device to display the statistical value indicated by the statistical value data set generated by the generation unit for each of the plurality of populations.

3. The data processing system according to Claim 2, wherein:

   the generation unit is configured to generate, for each of the plurality of populations, a statistical value data set for each of a plurality of different types of statistical values, the statistical value data set representing a statistical value of values indicated by the sample data sets in the population; and

the display instruction unit is configured to instruct the display device to display the statistical values indicated by the statistical value data sets by way of an image in which a plurality of display elements, each of which corresponds to each of the plurality of populations, are arranged within a coordinate space having a plurality of coordinate axes, each of which corresponds to each of the plurality of different types of statistical values.

4. The data processing system according to Claim 1, wherein:

the acquisition unit is configured to acquire, for each of a plurality of vessels, a plurality of sample data sets during a same period of an actual voyage of the vessel, each of the plurality of sample data sets indicating, in addition to values of a plurality of parameters including the one or more parameters representing the performance of the vessel and the one or more parameters affecting the performance, one or more cost values each of which corresponds to the one or more parameters affecting the performance, and

the data processing system further comprises a display instruction unit configured to instruct a display device to display the one or more statistical values indicated by the one or more statistical value data sets by way of an image in which one or more display elements each of which corresponds to each of the one or more populations is arranged within a coordinate space having a coordinate axis corresponding to the one or more statistical values indicated by the one or more statistical value data sets and a coordinate axis corresponding to each of the one or more cost values indicated by the one or more sample data sets.

5. The data processing system according to Claim 1, wherein:

the acquisition unit is configured to acquire, for a single vessel, a plurality of sample data sets each of which indicates a plurality values of a single parameter for a plurality of different time periods; and

the generation unit is configured to generate, for a value determined based on the plurality of values of the single parameter for the plurality of different time periods, a statistical value data set representing a statistical value of values indicated by the sample data sets in the population.

6. The data processing system according to Claim 1, further comprising:

the acquisition unit is configured to acquire, for each of the plurality of vessels, a plurality of sample data sets during a same period of an actual voyage of a vessel, each of the plurality of sample data sets indicating, in addition to values of a plurality of parameters including one or more parameters representing a performance of the vessel and one or more parameters affecting the performance, one or more cost values each of which corresponds to the one or more parameters affecting the performance, and

the data processing system further comprises a calculation unit configured to calculate, according to a predetermined calculation formula, a cost value corresponding to the population using the statistical values indicated by the statistical value data sets and the cost values indicated by the sample data sets.

7. The data processing system according to Claim 1, wherein:

the acquisition unit is configured to acquire a first extraction condition data set and a second extraction condition data set, each of which indicates extraction conditions for a focus parameter having different conditions;

the extraction unit is configured to extract, as a first population, one or more sample data sets satisfying the extraction conditions indicated by the first extraction condition data, and to extract, as a second population, one or more sample data sets satisfying the extraction conditions indicated by the second extraction condition data;

the generation unit is configured to generate a first statistical value data set representing a statistical value of the values indicated by the sample data sets in the first population, and to generate a second statistical value data set representing a statistical value of the values indicated by the sample data sets in the second population, and

the data processing system further comprises a calculation unit configured to calculate, based on the statistical value indicated by the first statistical value data set and the statistical value indicated by the second statistical value data set, a performance value that the vessel corresponding to the sample data sets included in the first population would exhibit if a condition for the focus parameter were changed to the conditions indicated by the second extraction condition data.

8. A data processing system comprising:

an acquisition unit configured to acquire, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters;

an extraction unit configured to extract, as a population, one or more sample data sets that satisfy the one or more extraction conditions indicated by the extraction condition data set from among the plurality of sample data sets for each of the plurality of vessels; and

a generation unit configured to generate, for each of the one or more parameters selected from among the plurality of parameters and parameters determined based on one or more of the plurality of parameters, a distribution data set representing a distribution of values indicated by the sample data sets in the population.

9.  The data processing system according to Claim 8, wherein:

the acquisition unit is configured to acquire a plurality of extraction condition data sets;

the extraction unit is configured to extract, for each of the plurality of extraction condition data sets, one or more sample data sets that satisfy one or more extraction conditions indicated by the extraction condition data set, as a population;

the generation unit is configured to generate, for each of a plurality of populations extracted by the extraction unit, a distribution data set representing a distribution of values indicated by the sample data sets in the population, and the data processing system further comprises a display instruction unit configured to instruct a display device to display the distribution of values indicated by the distribution data set generated by the generation unit for each of the plurality of populations.

10.  The data processing system according to Claim 8, wherein:

the acquisition unit is configured to acquire, for a single vessel, a plurality of sample data sets each of which indicates a plurality values of a single parameter for a plurality of different time periods; and

the generation unit is configured to generate, for a value determined based on the plurality of values of the single parameter for the plurality of different time periods, a distribution data set representing a distribution of values indicated by the sample data sets in the population.

11.  A program for causing a computer to execute processes comprising:

acquiring, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters;

extracting, as a population, one or more sample data sets that satisfy the one or more extraction conditions indicated by the extraction condition data set from among the plurality of sample data sets for each of the plurality of vessels; and

generating, for each of the one or more parameters selected from among the plurality of parameters and parameters determined based on one or more of the plurality of parameters, a statistical value data set representing a statistical value of values indicated by the sample data sets in the population.

12.  A program for causing a computer to execute processes comprising:

acquiring, for each of a plurality of vessels, a plurality of sample data sets, each of the plurality of sample data sets indicating values of a plurality of parameters of a vessel during a same period of an actual voyage of the vessel, the plurality of parameters including one or more parameters representing a performance of the vessel and one or more parameters affecting the performance, and an extraction condition data set indicating one or more extraction conditions for one or more parameters selected from among the plurality of parameters;

extracting, as a population, one or more sample data sets that satisfy the one or more extraction conditions indicated by the extraction condition data set from among the plurality of sample data sets for each of the plurality of vessels; and

generating, for each of the one or more parameters selected from among the plurality of parameters and parameters determined based on one or more of the plurality of parameters, a distribution data set representing a distribution of values indicated by the sample data sets in the population.

[FIG. 1]

[FIG. 2]

[FIG. 3]

PARAMETER DEFINITION

PARAMETER ▽

PARAMETER NAME

SAVE

USER-DEFINED PARAMETER

PARAMETER 1
PARAMETER 2
PARAMETER 3
PARAMETER 4
PARAMETER 5

OK            DELETE

[FIG. 4]

VESSEL TYPE ☑ [_____▽]  BEAUFORT WIND FORCE SCALE [_] [_____]~[_____]

SHIPBUILDING COUNTRY [_] [_____▽]  SWELL [_] [_____]~[_____]

SHIPYARD [_] [_____▽]  WIND DIRECTION [_] [_____▽]

LOADING CAPACITY [_] [_____]~[_____]  ANTIFOULING COATING NAME [_] [_____]~[_____]

SPEED OVER GROUND [_] [_____]~[_____]  TOTAL NAVIGATION DISTANCE (*1) [_] [_____]~[_____]

SPEED THRU WATER [_] [_____]~[_____]  TOTAL NAVIGATION DISTANCE (*2) [_] [_____]~[_____]

FUEL CON-SUMPTION [_] [_____]~[_____]  FOULING COEFFICIENT [_] [_____]~[_____]

HORSE-POWER [_] [_____]~[_____]

MAIN ENGINE RPM [_] [_____]~[_____]

*1. AFTER LAST ANTIFOULING COATING DATE
*2. AFTER LAST UWC DATE

EXTRACTION CONDITION NAME

[_____]  ( SAVE )

EXTRACTION CONDITION

| EXTRACTION CONDITION 1 | △ |
| EXTRACTION CONDITION 2 | |
| EXTRACTION CONDITION 3 | |
| EXTRACTION CONDITION 4 | |
| EXTRACTION CONDITION 5 | ▽ |

( OK )          ( DELETE )

[FIG. 5]

TEMPLATE TYPE [_____ ▽] R1

FOCUS PARAMETER [_____ ▽]

X-AXIS [_____ ▽]

Y-AXIS [_____ ▽]

OUTPUT TEMPLATE NAME

[_____] SAVE

OUTPUT TEMPLATE

| OUTPUT TEMPLATE 1 | △ |
| OUTPUT TEMPLATE 2 | |
| OUTPUT TEMPLATE 3 | |
| OUTPUT TEMPLATE 4 | |
| OUTPUT TEMPLATE 5 | ▽ |

OK        DELETE

[FIG. 6]

[FIG. 7]

[FIG. 8]

[FIG. 9A]

[FIG. 9B]

[FIG. 9C]

[FIG. 9D]

[FIG. 10]

| ANTIFOULING COATING NAME | MEAN FOULING COEFFICIENT | TOTAL COST |
|---|---|---|
| A | 0.54 | 2,115 |
| B | 1.30 | 2,853 |
| C | 0.88 | 1,789 |
| D | 1.55 | 2,317 |

[FIG. 11]

[FIG. 12]

[FIG. 13]

## INTERNATIONAL SEARCH REPORT

| International application No. |
| --- |
| **PCT/JP2023/001628** |

### A. CLASSIFICATION OF SUBJECT MATTER

*B63B 79/00*(2020.01)i
FI: B63B79/00

According to International Patent Classification (IPC) or to both national classification and IPC

### B. FIELDS SEARCHED

Minimum documentation searched (classification system followed by classification symbols)

B63B79/00, B63B71/00, B63B49/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-172073 A (SUMITOMO HEAVY INDUSTRIES MARINE & ENGINEERING CO., LTD.) 10 October 2019 (2019-10-10)<br>paragraphs [0019]-[0070], fig. 1-9 | 1-3, 5, 8-12 |
| A | 宮本雅史, 実海域中推進性能の推定と評価　—汚損・経年、海象影響の検証と評価—, 日本船舶海洋工学会論文集, December 2007, no. 6, pp. 205-214, DOI:10.2534/jjasnaoe.6.205, ISSN 1881-1760 (online),1880-3717 (print), (MIYAMOTO, Masafumi. Estimation and Evaluation of Ship Performance in Actual Seas-Review and Evaluation of Fouling, Aging Effect and Sea Condition-. Journal of the Japan Society of Naval Architects and Ocean Engineers.)<br>entire text, all charts | 1-12 |
| A | JP 2018-27740 A (KAWAJU TECHNOLOGY KK) 22 February 2018 (2018-02-22)<br>entire text, all drawings | 1-12 |
| A | JP 2018-34585 A (DIESEL UNITED KK) 08 March 2018 (2018-03-08)<br>entire text, all drawings | 1-12 |

☑ Further documents are listed in the continuation of Box C.　　☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 March 2023** | **28 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 653 309 A1

## INTERNATIONAL SEARCH REPORT

International application No.

**PCT/JP2023/001628**

### C. DOCUMENTS CONSIDERED TO BE RELEVANT

| Category* | Citation of document, with indication, where appropriate, of the relevant passages | Relevant to claim No. |
|---|---|---|
| A | 石井幹久・庄司るり・武隈克義, ニューラルネットワークを用いた実海域における船舶推進性能の推定, 日本航海学会論文集, 2020, vol. 142, pp. 79-88, DOI: 10.9749/jin.142.79, ISSN 2187-3275 (online),0388-7405 (print), (ISHII, Mikihisa. SHOJI, Ruri. TAKEKUMA, Katsuyoshi. Estimation of Ship Performance at Sea Using Neural Network. Journal of Japan Institute of Navigation.)<br>    entire text, all charts | 1-12 |
| A | 山田省吾, 柴田隼吾, 船舶IoTデータ活用による安全運航　日本郵船における「Sustainable Solution Provider」を目指した取り組み, 日本船舶海洋工学会誌 KANRIN（咸臨）, 10 May 2021, no. 96, pp. 10-14, DOI: 10.14856/kanrin.96.0_10, ISSN 2424-161X (online),1880-3725 (print), (YAMADA, Shogo. SHIBATA, Jungo. Bulletin of The Japan Society of Naval Architects and Ocean Engineers, KANRIN.), non-official translation (Safety operation of using ship IoT data: Efforts aimed at "Sustainable Solution Provider" in NYK Line)<br>    entire text, all drawings | 1-12 |

Form PCT/ISA/210 (second sheet) (January 2015)

**INTERNATIONAL SEARCH REPORT**
Information on patent family members

International application No.

**PCT/JP2023/001628**

| Patent document cited in search report | | | Publication date (day/month/year) | Patent family member(s) | | | Publication date (day/month/year) |
|---|---|---|---|---|---|---|---|
| JP | 2019-172073 | A | 10 October 2019 | CN | 110316331 | A | |
| | | | | KR | 10-2019-0113568 | A | |
| JP | 2018-27740 | A | 22 February 2018 | (Family: none) | | | |
| JP | 2018-34585 | A | 08 March 2018 | (Family: none) | | | |

Form PCT/ISA/210 (patent family annex) (January 2015)

**REFERENCES CITED IN THE DESCRIPTION**

**Patent documents cited in the description**

- JP 2015083468 A